(19)

Europäisches Patentamt
European Patent Office
Office européen des brevets

(11) **EP 2 570 455 A1**

(12) **EUROPEAN PATENT APPLICATION**

(43) Date of publication:
**20.03.2013 Bulletin 2013/12**

(51) Int Cl.:
***C08L 23/06*** (2006.01)    ***C08L 23/08*** (2006.01)

(21) Application number: **11007578.5**

(22) Date of filing: **16.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
• **Palmlöf, Magnus**
  **42671 Västra Frölunda (SE)**
• **Bäckman, Mats**
  **Deceased (SE)**

(74) Representative: **Kador & Partner**
  **Corneliusstrasse 15**
  **80469 München (DE)**

(54) **Polyethylene composition with broad molecular weight distribution and improved homogeneity**

(57)    The present application relates to a polyethylene composition comprising a base resin having a density of at least 948 kg/m$^3$, wherein the composition has a shear thinning index SHI$_{(2.7/210)}$, being the ratio of the viscosity at a complex modulus of 2.7 kPa and of 210 kPa, of 55 or more and 105 or less and a viscosity at a shear stress of 747 Pa, eta$_{747\ Pa}$, of 450 kPas or more, a process for the production of said polyethylene composition, an article comprising said polyethylene composition and the use of said polyethylene composition for the production of an article.

EP 2 570 455 A1

**Description**

The present application relates to a polyethylene composition with a broad molecular weight distribution expressed in a $SHI_{2.7/210}$ of 55 or more and 105 or less suitable for pipe applications which shows improved homogeneity, a process for producing such a polyethylene composition in a multistage process, an article, such as a pipe, made thereof and the use of the polyethylene composition for the production of such an article.

Generally, the strength properties of polyethylene compositions depend on their molecular weight. The higher the molecular weight, the greater are elasticity, stiffness and creep properties. In certain applications like film, bottle, cable coating and pipe applications manufactured by extrusion or blow molding polyethylene compositions having a high molecular weight combined with a narrow molecular weight distribution show bad flowing properties and a bad processability. Therefore, different approaches have been suggested for manufacturing polyethylene compositions with a broad molecular weight distribution.

One way of broadening the molecular weight distribution is to blend high and low molecular weight polyethylene fractions. However, by mechanical mixing it is difficult to get a product with sufficient homogeneity. By applying solution mixing, expensive equipment is needed so that these methods are either uneconomical or unsatisfactory.

Further, by choosing suitable polymerization catalysts the broadening of the molecular weight distribution is rather limited. Furthermore, even though some catalysts are capable of producing a broad molecular weight distribution, their ability to produce polyethylene resins having a good balance between mechanical properties and processability is limited because the catalysts usually cannot incorporate the comonomer(s) selectively into the polymer chains having the highest molecular weight.

Two stage processes for broadening the molecular weight distribution by using different hydrogen concentrations in the different stages are known in which in the first stage a polymer fraction is polymerized in the presence of a high hydrogen concentration and in the second stage in the presence of a low hydrogen concentration or vice versa. In the former case it is necessary to remove the unreacted gases and hydrogen after the first stage. In the latter case, the conventional Ziegler-Natta catalysts tend to lose their activity during the progress of polymerization already at the first stage. The rate of polymerization, which is initially high, decreases at the second reactor because of the lowered activity of the catalyst and of the high hydrogen concentration. As a consequence, the residence time in the second reactor becomes much longer than in the first stage. As a consequence a reactor of larger size has to be used in the second stage which leads to further difficulties in the control of the whole process. Furthermore, the comonomer that was used in the first polymerization stage needs to be removed from the reaction mixture so that it is not carried over to the subsequent polymerization stages.

Different polymerization methods can be used in multi-stage processes. Known multi-stage processes are for example slurry phase-slurry phase processes, gas phase-gas phase processes or slurry phase-gas phase processes. An example for slurry phase-slurry phase polymerization is described in EP 580 930 disclosing two sequential loop reactors. As examples for slurry phase-gas phase polymerization processes GB 1 532 231, US 4 309 521, US 4 368 304 and EP 517 868 are mentioned. The latter publication relates to a process for manufacturing a multimodal polyethylene resin having a bimodal and/or broad molecular weight distribution in a loop reactor and gas phase reactor arranged in series. In the first reactor stage ethylene, catalyst, cocatalyst, inert low boiling hydrocarbon and advantageously hydrogen is fed into a loop reactor for polymerizing a first polyethylene fraction, the residence time in the reactor being at least 10 minutes, at least an essential amount of reaction medium is separated and the polymer fraction is transferred to one or more gas phase reactors where the polymerization is completed in the presence of ethylene, optionally hydrogen and/or comonomer.

In EP 0 797 599 a three-stage polymerization process for producing multimodal polyethylene resins is disclosed in which bimodal polyethylene with a broad molecular weight distribution is produced in two loop reactors and a gas phase reactor connected in series. The first loop reactor refers to a pre-polymerization reactor in which a polyethylene in an amount of 1 to 20 wt% of the final polyethylene resin is produced.

The multi-stage processes disclosed in EP 517 868 and EP 0 797 599 produce polyethylene powders where the inhomogeneity is high for some special uses due to the residence time distribution of the catalyst particles in the loop reactors and the gas phase reactors, and this may adversely affect e.g the surface properties and other properties of the polymer composition.

In order to improve the residence time of the polymer particles in the different reactor stages EP 2 186 833 suggests to produce multimodal polyethylene resins in a three-stage polymerization process in which two low molecular weight polyethylene fractions are produced in two loop reactors and a high molecular weight polyethylene fraction is produced in a gas phase reactor which connected in series.

When compounding multimodal polyethylene compositions e.g. for producing pipes, so-called "white spots" occur in the compounded material. These white spots usually have a size of below 10 to about 50 micrometer and consist of high molecular weight polymer particles that have not been adequately dispersed in the composition. Further, when compounding polymer compositions e.g. for the production of films gel particles with a size of about 0.01 to 1 mm often occur. These gel particles also consist of high molecular weight polymer particles not adequately dispersed and appear as disfiguring inhomogeneities in the finished film.

Still further, inhomogeneities in multimodal polymer compositions may also increase roughness of the surface of articles produced thereof. As a side effect of the inherent inhomogeneity in the polyethylene powder particles operational problems in the gas phase reactor may occur, such as chunk and hot-spot formation.

As a measure for the homogeneity in multimodal resins the ISO 18553:2002 test can be applied. ISO 18553:2002 originally is a method for rating pigmented spots, i.e. serves to determine how well pigments are dispersed in a polymer. As the dispersion of the pigment is dependent on the overall homogeneity of the polymer because inhomogeneities of the polymer are not coloured by the pigment, ISO 18553:2002 can also be used as a measure for the homogeneity of a polymer by counting the non-coloured white spots and rating them according to the ISO 18553:2002.

There is still a need for providing a polyethylene resin with a broad molecular weight distribution that shows improved homogeneity.

In a first aspect of the invention the present application therefore relates to a polyethylene composition comprising a base resin having a density of at least 948 kg/m$^3$, wherein the composition has a shear thinning index $SHI_{(2.7/210)}$, being the ratio of the viscosity at a complex modulus of 2.7 kPa and of 210 kPa, of 55 or more and 105 or less and a viscosity at a shear stress of 747 Pa, $eta_{747\,Pa}$ of 450 kPas or more.

Thereby, the composition preferably has a rating in the ISO 18553:2002 white spot rating test of below 2.5.

In a second aspect of the invention the present application relates to a polyethylene composition comprising a base resin, wherein the composition has a shear thinning index $SHI_{(2.7/210)}$, being the ratio of the viscosity at a complex modulus of 2.7 kPa and of 210 kPa, of 55 or more and 105 or less, a viscosity at a shear stress of 747 Pa, $eta_{747\,Pa}$ of 450 kPas or more, and a rating in the ISO 18553:2002 white spot rating test of below 2.5.

Thereby, the base resin preferably has a density of at least 948 kg/m$^3$.

It has surprisingly been found that even by broadening the molecular weight distribution of the polyethylene composition to a $SHI_{2.7/210}$ of 55 or more and 105 or less it is possible to obtain a polyethylene composition with an improved homogeneity. Due to the broad molecular weight distribution the polyethylene composition according to the invention shows improved mechanical properties e.g. in the rapid crack propagation test.

The following properties of the polyethylene composition are applicable to both aspects of the present invention.

Usually, a polyethylene composition comprising at least two polyethylene fractions, which have been produced under different polymerisation conditions resulting in different (weight average) molecular weights and/or different comonomer contents for the fractions, is referred to as "multimodal". The prefix "multi" relates to the number of different polymer fractions of the composition consisting of. Thus, for example, a composition consisting of two fractions only is called "bimodal".

Thereby the term "different" means that the polyethylene fractions differ from each other in at least one property, preferably in the weight average molecular weight or comonomer content or both.

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

Preferably, the final polyethylene compositions produced by the inventive process are multimodal polyethylene compositions.

The base resin of the polyethylene composition preferably comprises more than two different ethylene homo- or copolymer fractions, more preferably three or more ethylene homo- or copolymer fractions (A), (B) and (C).

The term "base resin" means the entirety of polymeric components in the polyethylene composition according to the invention, usually making up at least 90 wt% of the total composition. Preferably, the base resin is consisting of fractions (A), (B) and (C), optionally further comprising a prepolymer fraction in an amount of up to 20 wt%, more preferably up to 10 wt%, and most preferably up to 5 wt% of the total base resin.

In addition to the base resin, usual additives for utilization with polyolefins, such as pigments (e.g. carbon black), stabilizers (e.g. antioxidant agents), antacids and/or anti-UV's, antistatic agents and utilization agents (such as processing aid agents) may be present in the polyethylene composition. Preferably, the amount of these additives is 10 wt% or below, more preferably 8 wt% or below, most preferably 5 wt% or below, of the composition.

Preferably, the composition comprises carbon black in an amount of 8 wt% or below, more preferably in an amount of 1 to 4 wt%, of the total composition.

Further preferred, the amount of additives different from carbon black is 1 wt% or less, more preferably 0.5 wt% or less.

It is preferred that at least two of the fractions (A), (B) and (C) are ethylene copolymers.

An ethylene copolymer in this regard denotes a polymer comprising at least 50 wt% of ethylene monomer units.

Preferably the fractions (A), (B) and (C) differ in their comonomer content.

Fraction (A) may be an ethylene homopolymer or the ethylene copolymer with the lowest comonomer content of the three fractions (A), (B) and (C). It is preferred that fraction (A) is an ethylene homopolymer.

An ethylene homopolymer thereby denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

Fraction (A) further preferably has a melt flow rate $MFR_2$ of at least 100 g/10 min, more preferably at least 250 g/10 min, still more preferably at least 500 g/10 min and most preferably at least 550 g/10 min.

The upper limit of the melt flow rate $MFR_2$ of fraction (A) is preferably 1100 g/10 min, more preferably 1000 g/10 min, still more preferably 900 g/10 min and most preferably 800 g/10 min.

Fraction (A) preferably has a density of 970 kg/m$^3$ or more.

Fraction (A) is preferably polymerized as first fraction in a multistage process so that direct measurement of $MFR_2$ and density is possible.

Fraction (A) is preferably present in the composition in an amount of at least 40 wt%, more preferably at least 45 wt% and most preferably at least 48 wt%.

Fraction (A) is preferably present in the composition in an amount of not more than 65 wt%, more preferably not more than 60 wt% and most preferably not more than 55 wt%.

It is preferred that fractions (B) and (C) are copolymers of ethylene and at least one alpha-olefin comonomer. The alpha-olefin conomoner preferably is selected from alpha-olefin conomoners with 3 to 12 carbon atoms, more preferably 4 to 8 carbon atoms. Suitable alpha-olefin comonomer species are 1-butene, 1-hexene and 1-octene. Thereby, 1-hexene is mostly preferred.

Preferably, fraction (C) has a higher comonomer content as fraction (B).

Fraction (B) preferably has a comonomer content of more than 0.1 mol%, more preferably more than 0.3 mol%, such as more than 0.5 mol%.

Fraction (B) preferably has a comonomer content of below 3.0 mol%, more preferably below 2.5 mol%, most preferably below 2.0 mol%.

Fraction (C) preferably has a comonomer content of more than 1.5 mol%, more preferably more than 1.7 mol%, such as more than 1.9 mol%. Fraction (C) preferably has a comonomer content of below 10.0 mol%, more preferably below 7.5 mol%, most preferably below 5.0 mol%.

In one embodiment fraction (A) denotes a copolymer of ethylene and at least one alpha-olefin comonomer. The alpha-olefin conomoner preferably is selected from alpha-olefin conomoners with 3 to 12 carbon atoms, more preferably 4 to 8 carbon atoms. Suitable alpha-olefin comonomer species are 1-butene, 1-hexene and 1-octene. Thereby, 1-hexene is mostly preferred.

In this embodiment fraction (A) preferably has the lowest comonomer content. The comonomer content of fraction (A) thereby is preferably below 1.0 mol%, more preferably below 0.5 mol%, such as below 0.2 mol%.

Fraction (B) is preferably present in the base resin in an amount of at least 20 wt%, more preferably at least 25 wt% and such as at least 30 wt%.

Fraction (B) is preferably present in the base resin in an amount of not more than 45 wt%, more preferably not more than 42 wt% and most preferably not more than 40 wt%.

Fraction (B) is preferably present in the base resin in an amount of at least 20 wt%, more preferably at least 25 wt% and such as at least 30 wt%.

Fraction (C) is preferably present in the base resin in an amount of at least 4 wt%, more preferably at least 6 wt% and such as at least 8 wt%.

Fraction (C) is preferably present in the base resin in an amount of not more than 20 wt%, more preferably not more than 15 wt% and most preferably not more than 12 wt%.

Preferably, the weight ratios of fractions (A) : (B) and (C) is 40 : 60 to 65 : 35, more preferably 45 : 55 to 60 : 40.

The weight ratios of fractions (B) : (C) is preferably 55 : 45 to 95 : 5, more preferably 65 : 35 to 85 : 15.

The base resin preferably has a density of 950 kg/m$^3$ or more, more preferably of 952 kg/m$^3$ or more, most preferably of 954 kg/m$^3$ or more.

The upper limit of the density of the base resin is preferably 965 kg/m$^3$, more preferably 960 kg/m$^3$.

It is further preferred that the polyethylene composition has a melt flow rate $MFR_5$ of below 1.0 g/10 min, more preferably below 0.6 g/10 min, most preferably below 0.4 g/10 min.

Preferably, the polyethylene composition has a melt flow rate $MFR_5$ of 0.05 g/10 min or more, more preferably of 0.1 g/10 min or more, most preferably of 0.2 g/10 min or more.

Preferably, the polyethylene composition has a melt flow rate $MFR_{21}$ of 5.0 g/10 min or more, more preferably of 7.0 g/10 min or more, most preferably of 8.5 g/10 min or more.

It is further preferred that the polyethylene composition has a melt flow rate $MFR_{21}$ of below 25.0 g/10 min, more preferably below 20.0 g/10 min, most preferably below 15.0 g/10 min.

Further, the polyethylene composition preferably has a flow rate ratio $FRR_{21/5}$ of 20 or more, more preferably 25 or more and most preferably of 30 or more.

The flow rate ratio $FRR_{21/5}$ is preferably 50 or less, more preferably 40 or less and most preferably of 38 or less.

The polyethylene composition according to the invention has a broad molecular weight distribution which can be seen in a high shear thinning index $SHI_{(2.7/210)}$.

The polyethylene composition preferably has a shear thinning index $SHI_{(2.7/210)}$ of 60 or more, more preferably of 70 or more and most preferably of 75 or more.

The polyethylene composition preferably has a shear thinning index $SHI_{(2.7/210)}$ of 100 or less, more preferably of 95 or less and most preferably of 90 or less.

Preferably, the polyethylene composition has a viscosity at a complex modulus of 2.7 kPa, $eta_{2.7}$ kPa, of 200 kPas or more, more preferably of 250 kPas or more, most preferably of 300 kPas or more.

The viscosity $eta_{2.7}$ kPa of the polyethylene composition is preferably 500 kPas or less, more preferably 450 kPas or less, most preferably 400 kPas or less.

Further preferred is that the polyethylene composition has a viscosity $eta_{747\,Pa}$ of 470 kPas or more, more preferably of 500 or more.

The viscosity $eta_{747\,Pa}$ of the polyethylene composition is preferably not more than 900 kPas, more preferably not more than 800 kPas, most preferably not more than 700 kPas.

The polyethylene composition according to the present invention shows improved homogeneity in the white spot rating test.

Preferably the rating in the ISO 18553:2002 white spot rating test is below 2.3, more preferably below 2.0. The lower limit of this rating is preferably 0.1.

Further, the polyethylene composition preferably has a white spot area of below 0.5%, more preferably below 0.3%, most preferably below 0.1%. The lower limit of the white spot area is preferably 0.001%.

It is further preferred that the polyethylene composition has a critical temperature, i.e. the ductile-to-brittle transition temperature, in the rapid crack propagation test according to ISO 13477:1997 (E) of -10°C or lower, more preferably of -11°C or lower, most preferably of -12°C or lower. The critical temperature usually does not exceed a lower limit -30°C.

The invention is further related to a process for the production of a polyethylene composition according to any of the above described embodiments wherein the base resin is produced in a multi-stage process.

Preferably, the base resin comprises more than two different ethylene homo- or copolymer fractions, more preferably three or more ethylene homo- or copolymer fractions (A), (B) and (C) as described above.

Optionally, the base resin further comprises a prepolymer fraction as described above.

A multi-stage polymerization process denotes a process in which a polymer comprising two or more fractions is produced by polymerizing each of the at least two polymer fractions in a separate reaction stage, usually with different reaction conditions in each stage which comprises a polymerization catalyst. The polymerization is preferably followed by a compounding step.

It is preferred that the fractions (A), (B) and (C) are polymerized at different stages of the multi-stage process in any order. It is thereby preferred that the fractions (A), (B) and (C) are polymerized in subsequent stages.

It is preferred that the base resin of the polyethylene composition according to the invention is polymerized in at least one slurry phase reactor and at least one gas phase reactor.

In a preferred embodiment fraction (A) is polymerized in a slurry phase reactor, preferably a loop reactor, and fractions (B) and (C) are polymerized in gas phase reactors in any order.

In any order denotes that there is no preferred order in which the subsequent polymerization stages of the multi-stage process are arranged.

In one preferred embodiment of the process according to the invention, fraction (A) is polymerized in the first reaction stage.

It is thereby preferred that fraction (B) is polymerized in the second reaction stage in the presence of fraction (A).

Fraction (C) is preferably polymerized in the third reaction stage in the presence of fractions (A) and (B).

Preferably, the multistage process consists of a reaction stage conducted in a slurry phase reactor followed by two reaction stages conducted in gas phase reactors. Optionally, the reaction stage conducted in the slurry phase reactor is thereby preceded by a prepolymerization stage.

It is preferred that fraction (A) is polymerized in a slurry phase reactor.

In slurry phase polymerisation the polymer particles formed in the polymerisation together with the catalyst fragmented and dispersed within the particles, are suspended in fluid hydrocarbon. The slurry phase is agitated to enable the transfer of reactants from the fluid into the particles.

The polymerisation in the slurry phase reactor usually takes place in an inert diluent, typically a hydrocarbon diluent which is selected from a group comprising $C_3$ to $C_8$ hydrocarbons, such as methane, ethane, propane, n-butane, isobutane, hexanes such as n-hexane, heptanes, octanes etc. or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerisation steps.

The ethylene content in the fluid phase of the slurry in the slurry phase reactor may be from 0.5 to 50 % by mole, preferably from 1 to 20 % by mole, and in particular from 2 to 10 % by mole. The benefit of having a high ethylene concentration is that the productivity of the catalyst is increased but the drawback is that more ethylene then needs to be recycled than if the concentration was lower.

The temperature in the slurry phase polymerisation is typically from 50 to 115 °C, preferably from 60 to 110 °C and in particular from 70 to 100 °C. The pressure is typically from 1 to 150 bar, preferably from 1 to 100 bar.

The slurry phase polymerisation may be conducted in any known reactor used for slurry phase polymerisation. Such reactors include a continuous stirred tank reactor and a loop reactor. It is especially preferred to conduct the polymerisation in a loop reactor. In such reactors the slurry is circulated with a high velocity along a closed pipe by using a circulation pump. Loop reactors are generally known in the art and examples are given, for instance, in US-A-4,582,816, US-A- 3,405, 109, US-A-3,324,093, EP-A-479 186 and US-A-5,391,654.

It is sometimes advantageous to conduct the slurry phase polymerisation above the critical temperature and pressure of the fluid mixture. Such operations are described in US-A-5,391,654. In such an operation the temperature is typically at least 85 °C, preferably at least 90 °C. Furthermore the temperature is typically not higher than 110 °C, preferably not higher than 105 °C. The pressure under these conditions is typically at least 40 bar, preferably at least 50 bar. Furthermore, the pressure is typically not higher than 150 bar, preferably not higher than 100 bar. In a preferred embodiment the slurry phase polymerization step, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

The slurry may be withdrawn from the slurry phase reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants the fluid which is withdrawn with the polymer evaporates in a flash tank and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages continuous withdrawal is often preferred.

The continuous withdrawal, on the other hand, has the problem that it typically withdraws the polymer in the same concentration as it is present within the reactor. To reduce the amount of hydrocarbons to be compressed the continuous outlet is advantageously combined with a suitable concentration device, such as a hydrocyclone or sieve, as disclosed in EP-A-1 415 999 and EP-A-1 591 460. The polymer-rich stream is then directed to a flash and the polymer-lean steam is returned directly into the reactor.

For adjusting the $MFR_2$ of the polyethylene fraction polymerised in the slurry phase reactor preferably hydrogen is introduced into the reactor. The hydrogen feed is preferably adjusted to the ethylene feed in order to fulfil a hydrogen to ethylene ratio in the slurry phase reactor of 250 to 1000 mol/kmol, more preferably of 500 to 800 mol/kmol.

The polyethylene fraction produced in the slurry phase reactor can be an ethylene homo- or copolymer fraction. If polymerising a copolymer, comonomers preferably are selected from the group comprising 1-butene, 1-hexene, 4-methyl-1-pentene, 1-octene or their mixtures, especially preferred is 1-hexene. In a preferred embodiment in the slurry phase reactor an ethylene homopolymer is polymerised so that no comonomer is fed to this reaction stage.

The residence time and the polymerisation temperature in the slurry phase reactor are adjusted as such as to polymerise an ethylene homo- or copolymer fraction typically in an amount of at least 40 wt%, more preferably at least 45 wt% and most preferably at least 48 wt% and not more than 65 wt%, more preferably not more than 60 wt% and most preferably not more than 55 wt%.

The polymer fraction produced in the slurry phase reactor preferably is transferred to at least one gas phase reactor.

In a fluidised bed gas phase reactor an olefin is polymerised in the presence of a polymerisation catalyst in an upwards moving gas stream. The reactor typically contains a fluidised bed comprising the growing polymer particles containing the active catalyst located above a fluidisation grid.

The polymer bed is fluidised with the help of a fluidisation gas comprising the olefin monomer, eventually comonomer(s), eventually chain growth controllers or chain transfer agents, such as hydrogen, and eventually inert gas.

The inert gas can thereby be the same or different as the inert gas used in the slurry phase reactor. The fluidisation gas is introduced into an inlet chamber at the bottom of the reactor. To make sure that the gas flow is uniformly distributed over the cross-sectional surface area of the inlet chamber the inlet pipe may be equipped with a flow dividing element as known in the art, e. g. US-A-4,933,149 and EP-A-684 871.

From the inlet chamber the gas flow is passed upwards through the fluidisation grid into the fluidised bed. The purpose of the fluidisation grid is to divide the gas flow evenly through the cross-sectional area of the bed. Sometimes the fluidisation grid may be arranged to establish a gas stream to sweep along the reactor walls, as disclosed in WO-A-2005/087261. Other types of fluidisation grids are disclosed, amongst others, in US-A-4,578,879, EP 600 414 and EP-A-721 798. An overview is given in Geldart and Bayens: The Design of Distributors for Gas-fluidised Beds, Powder Technology, Vol. 42, 1985.

The fluidisation gas passes through the fluidised bed. The superficial velocity of the fluidisation gas must be higher than the minimum fluidisation velocity of the particles contained in the fluidised bed, as otherwise no fluidisation would occur. On the other hand, the velocity of the gas should be lower than the onset velocity of pneumatic transport, as otherwise the whole bed would be entrained with the fluidisation gas. The minimum fluidisation velocity and the onset velocity of pneumatic transport can be calculated when the particle characteristics are known by using common engineering practice. An overview is given, amongst others, in Geldart: Gas Fluidisation Technology, J. Wiley & Sons, 1996.

When the fluidisation gas is contacted with the bed containing the active catalyst the reactive components of the gas, such as monomers and chain transfer agents, react in the presence of the catalyst to produce the polymer product. At the same time the gas is heated by the reaction heat.

The unreacted fluidisation gas is then removed from the top of the reactor, compressed and recycled into the inlet chamber of the reactor. Prior to the entry into the reactor fresh reactants are introduced into the fluidisation gas stream to compensate for the losses caused by the reaction and product withdrawal. It is generally known to analyse the composition of the fluidisation gas and introduce the gas components to keep the composition constant. The actual composition is determined by the desired properties of the product and the catalyst used in the polymerisation.

After that the gas is cooled in a heat exchanger to remove the reaction heat. The gas is cooled to a temperature which is lower than that of the bed to prevent the bed from being heated because of the reaction. It is possible to cool the gas to a temperature where a part of it condenses. When the liquid droplets enter the reaction zone they are vaporized. The vaporisation heat then contributes to the removal of the reaction heat. This kind of operation is called condensed mode and variations of it are disclosed, amongst others, in WO-A-2007/025640, US-A-4,543,399, EP-A-699 213, and WO-A-94/25495. It is also possible to add condensing agents into the recycle gas stream, as disclosed in EP-A-696 293. The condensing agents are non-polymerisable components, such as propane, n-pentane, isopentane, n-butane or isobutane, which are at least partially condensed in the cooler.

The polymeric product may be withdrawn from the gas phase reactor either continuously or intermittently. Combinations of these methods may also be used. Continuous withdrawal is disclosed, amongst others, in WO-A-00/29452. Intermittent withdrawal is disclosed, amongst others, in US-A-4,621,952, EP-A-188 125, EP-A-250 169 and EP-A-579 426.

The top part of the at least one gas phase reactor may include a so called disengagement zone. In such a zone the diameter of the reactor is increased to reduce the gas velocity and allow the particles that are carried from the bed with the fluidisation gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed levels.

Also antistatic agent(s) may be introduced into the at least one gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes alcohols.

The reactor may include a mechanical agitator to further facilitate mixing within the fluidised bed. An example of suitable agitator design is given in EP-A-707 513.

In a preferred embodiment the multi-stage process according to the invention comprises two gas phase reactors which are connected in series. The two gas phase reactors preferably succeed one slurry phase reactor.

It is preferred that in the first gas phase reactor fraction (B) of the polyethylene composition according to the invention is polymerized.

The temperature in the gas phase polymerisation in the first gas phase reactor typically is at least 70 °C, preferably at least 80 °C. The temperature typically is not more than 105 °C, preferably not more than 95 °C. The pressure is typically at least 10 bar, preferably at least 15 bar but typically not more than 30 bar, preferably not more than 25 bar.

In the first gas phase reactor the polymerisation conditions are selected as such that the polyethylene resin emerging from the first gas phase reactor, preferably consisting of fractions (A) and (B), optionally together with a prepolymer fraction, preferably has a $MFR_5$ of 0.1 to 2 g/10 min, more preferably 0.4 to 1.5 g/10 min, most preferably 0.5 to 1 g/10 min.

Further, the polyethylene resin emerging from the first gas phase reactor, preferably consisting of fractions (A) and (B), optionally together with a prepolymer fraction, preferably has a density of 945 to 965 $kg/m^3$, more preferably 950 to 962 $kg/m^3$ and most preferably 955 to 960 $kg/m^3$.

For adjusting the melt flow rate of the polyethylene fraction polymerised in the first gas phase reactor hydrogen may be introduced into the reactor. The hydrogen feed is preferably adjusted to the ethylene feed in order to fulfil a hydrogen to ethylene ratio in the first gas phase reactor of 20 to 120 mol/kmol, more preferably of 40 to 100 mol/kmol.

In the first gas phase reactor preferably an ethylene copolymer fraction is produced. The fluidisation gas stream thus comprises comonomers preferably selected from the group consisting of alpha-olefin conomoners with 3 to 12 carbon atoms, more preferably 4 to 8 carbon atoms. Suitable alpha-olefin comonomer species are 1-butene, 1-hexene and 1-octene. Thereby, 1-hexene is mostly preferred. The comonomer used in the first gas phase reactor may be the same or different than that used in the slurry phase reactor. The comonomer feed is preferably adjusted to the ethylene feed in order to fulfil a comonomer to ethylene ratio of at least 1 to 30 mol/kmol, more preferably 3 to 25 mol/kmol, most preferably 5 to 20 mol/kmol.

The residence time and the polymerisation temperature in the first gas phase reactor are adjusted as such as to polymerise an ethylene copolymer fraction typically in an amount of 20 to 45 wt%, preferably 25 to 42 wt% and most preferably 30-40 wt% of the total polyethylene resin.

The polymer fraction produced in the first gas phase reactor preferably is transferred to a second gas phase reactor.

It is preferred that in the second gas phase reactor fraction (C) of the polyethylene composition according to the invention is polymerized.

The temperature in the gas phase polymerisation in the second gas phase reactor typically is at least 70 °C, preferably at least 80 °C. The temperature typically is not more than 105 °C, preferably not more than 95 °C. The pressure is typically at least 10 bar, preferably at least 15 bar but typically not more than 30 bar, preferably not more than 25 bar.

In the second gas phase reactor the polymerisation conditions are selected as such that the final polyethylene base resin emerging from the second gas phase reactor, preferably consisting of fractions (A), (B) and (C), optionally together with a prepolymer fraction, preferably has a $MFR_5$ of 0.05 to 1.0 g/10 min, more preferably 0.1 to 0.6 g/10 min, most preferably 0.2 to 0.4 g/10 min.

Further, the final polyethylene base resin emerging from the second gas phase reactor, preferably consisting of fractions (A), (B) and (C), optionally together with a prepolymer fraction, preferably has a density of 948 $kg/m^3$ or more, more preferably 950 to 965 $kg/m^3$, still more preferably 952 to 960 $kg/m^3$ and most preferably 954 to 960 $kg/m^3$.

Preferably the density of the polymer resin consisting of fractions (A) and (B), optionally together with a prepolymer fraction, is higher than that of the base resin consisting of fractions (A), (B) and (C), optionally together with a prepolymer fraction.

For adjusting the melt flow rate of the polyethylene fraction polymerised in the second gas phase reactor hydrogen may be introduced into the reactor. The hydrogen feed is preferably adjusted to the ethylene feed in order to fulfil a hydrogen to ethylene ratio in the first gas phase reactor of 0 to 20 mol/kmol, more preferably of 0.2 to 10 mol/kmol.

In the second gas phase reactor preferably an ethylene copolymer fraction is produced. The fluidisation gas stream thus comprises comonomers preferably selected from the group consisting of alpha-olefin conomoners with 3 to 12 carbon atoms, more preferably 4 to 8 carbon atoms. Suitable alpha-olefin comonomer species are 1-butene, 1-hexene and 1-octene. Thereby, 1-hexene is mostly preferred. The comonomer used in the second gas phase reactor may be the same or different than that used in the first gas phase reactor. The comonomer feed is preferably adjusted to the ethylene feed in order to fulfil a comonomer to ethylene ratio of at least 15 to 100 mol/kmol, more preferably 17 to 75 mol/kmol, most preferably 19 to 50 mol/kmol.

The residence time and the polymerisation temperature in the first gas phase reactor are adjusted as such as to polymerise an ethylene copolymer fraction typically in an amount of 4 to 20 wt%, preferably 6 to 15 wt% and most preferably 8 to 12 wt% of the total polyethylene resin.

As catalyst system any system of catalyst and optionally cocatalyst can be used suitable for polymerising polyethylene resins. Especially suitable are Ziegler-Natta and metallocene catalyst systems. In a preferred embodiment the polymerisation is carried out in the presence of a Ziegler-Natta catalyst. Suitable Ziegler-Natta catalysts preferably contain a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 10 to 100 $\mu$m. However, it has turned out that special advantages can be obtained if the support has an average particle size from 15 to 30 $\mu$m, preferably from 18 to 25 $\mu$m. Alternatively, the support may have an average particle size of from 30 a 80 $\mu$m, preferably from 30 to 50

μm. Examples of suitable support materials are, for instance, ES747JR produced and marketed by Ineos Silicas (former Crossfield), and SP9-491, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794 or WO-A-99/51646. Alternatively, it can be prepared by first preparing a solution from the components and then contacting the solution with a carrier, as described in WO-A-01/55230.

Another, especially preferred, group of suitable Ziegler-Natta catalysts contain a titanium compound together with a magnesium halide compound without an inert support. Thus, the catalyst contains a titanium compound on a magnesium dihalide, like magnesium dichloride. Such catalysts are disclosed, for instance, in WO-A-2005/118655 and EP-A-810235.

The Ziegler-Natta catalyst is used together with an activator. Suitable activators are metal alkyl compounds and especially aluminium alkyl compounds. These compounds include alkyl aluminium halides, such as ethylaluminium dichloride, diethylaluminium chloride, ethylaluminium sesquichloride, dimethylaluminium chloride and the like. They also include trialkylaluminium compounds, such as trimethylaluminium, triethylaluminium, tri-isobutylaluminium, trihexylaluminium and tri-n-octylaluminium. Furthermore they include alkylaluminium oxy-compounds, such as methylaluminiumoxane, hexaisobutylaluminiumoxane and tetraisobutyl-aluminiumoxane. Also other aluminium alkyl compounds, such as iso-prenylaluminium, may be used. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

The catalyst system can be fed to any polymerisation stage but preferably is fed to the first polymerisation stage. Most preferably the catalyst system is only fed to the first polymerisation stage. The catalyst may be transferred into the polymerisation zone by any means known in the art. It is thus possible to suspend the catalyst in a diluent and maintain it as homogeneous slurry. Especially preferred is to use oil having a viscosity from 20 to 1500 mPa*s as diluent, as disclosed in WO-A-2006/063771. It is also possible to mix the catalyst with a viscous mixture of grease and oil and feed the resultant paste into the polymerisation zone. Still further, it is possible to let the catalyst settle and introduce portions of thus obtained catalyst mud into the polymerisation zone in a manner as disclosed, for instance, in EP-A- 428 054.

In a preferred embodiment the process may further comprise a pre-polymerisation step which precedes the polymerisation steps. The purpose of the pre-polymerisation is to polymerise a small amount of polymer onto the catalyst at a low temperature and/or a low monomer concentration. By pre-polymerisation it is possible to improve the performance of the catalyst in slurry and/or modify the properties of the final polymer. The pre-polymerisation step may be conducted in slurry or gas phase. Preferably the pre-polymerisation is conducted in slurry.

Thus, the pre-polymerisation step may be conducted in a loop reactor. The pre-polymerisation is then preferably conducted in an inert diluent, typically a hydrocarbon diluent such as methane, ethane, propane, n-butane, isobutene, pentanes, hexanes, heptanes, octanes etc., or their mixtures. Preferably the diluent is a low boiling hydrocarbon having from 1 to 4 carbon atoms or a mixture of such hydrocarbons. The most preferred diluent is propane.

The temperature in the pre-polymerisation step is typically from 0 °C to 90 °C., preferably from 20 °C to 80 °C and more preferably from 40 °C to 70 °C.

The pressure is not critical and is typically from 1 bar to 150 bar, preferably from 10 bar to 100 bar.

The amount of monomer is typically such that from 0.1 grams to 1000 grams of monomer per one gram solid catalyst component is polymerised in the pre-polymerisation step. As the person skilled in the art knows, the catalyst particles recovered from a continuous pre-polymerisation reactor do not all contain the same amount of pre-polymer. Instead, each particle has its own characteristic amount which depends on the residence time of that particle in the pre-polymerisation reactor. As some particles remain in the reactor for a relatively long time and some for a relatively short time, then also the amount of pre-polymer on different particles is different and some individual particles may contain an amount of pre-polymer which is outside the above limits. However, the average amount of pre-polymer on the catalyst typically is within the limits specified above.

In addition to ethylene monomer it is possible to use one or more alpha-olefin comonomers in the pre-polymerisation step if desired. Suitable comonomers are, for example, 1-butene, 1-hexene, 4-methyl-1-pentene, 1-octene and their mixtures.

It is however preferred that in the pre-polymerization step an ethylene homopolymer prepolymer fraction is polymerized.

The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the pre-polymerisation step. However, where the solid catalyst component and the cocatalyst can be fed separately it is possible that only a part of cocatalyst is introduced into the pre-polymerisation stage and the remaining part into the subsequent polymerisation stages. Also in such cases it is necessary to introduce as much cocatalyst into the pre-polymerisation stage as necessary to obtain a sufficient polymerisation reaction.

The polyethylene resins produced according to the inventive polymerisation process show an improved homogeneity. After a single compounding step with a pigment, such as e.g. carbon black, the white spots dispersed in the final polyethylene composition preferably have a homogeneity, expressed as the white spot dispersion, of less than 2.5, more preferably less than 2.3, most preferably less than 2.0, determined according to ISO 18553:2002.

Therefore, the polyethylene composition of the invention preferably is produced in a multi-stage process which further comprises a compounding step, wherein the base resin, which is typically obtained as a base resin powder from the reactor, is extruded in an extruder and then pelletized to polymer pellets in a manner known in the art to form the polyolefin composition of the invention.

Optionally, additives or other polymer components can be added to the composition during the compounding step in an amount as described above. Preferably, the composition of the invention obtained from the reactor is compounded in the extruder together with additives in a manner known in the art.

The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In one preferred embodiment, the extrusion step is carried out using feed rates of 150 to 300 kg/h, more preferably 200 to 250 kg/h.

The screw speed of the extruder is preferably 350 to 450 rpm, more preferably 380 to 420 rpm.

Preferably, in said extrusion step the SEI (specific energy input) of the extruder may be 200 to 300 kWh/ton, preferably 240 to 270 kWh/ton.

The melt temperature in said extrusion step is preferably 200 to 300°C, more preferably 240 to 270°C.

The benefit of the invention is that an excellent homogeneity can be obtained without extensive mixing, already effecting once the compounding step, e.g. the preferably extrusion with feed rates as defined above, and additionally, together with the high level homogeneity, desirable polymer properties, such as good mechanical properties can be obtained or maintained.

Furthermore, the present invention relates to an article, preferably a pipe, comprising a polyethylene composition as described above or obtainable by a process as described above, and to the use of such a polyethylene composition for the production of an article, preferably a pipe.

The present invention is further characterized by means of the following examples:

Examples:

1. Definitions

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_5$ of polyethylene is measured at a temperature 190 °C and a load of 5 kg, the $MFR_2$ of polyethylene at a temperature 190 °C and a load of 2.16 kg and the $MFR_{21}$ of polyethylene is measured at a temperature of 190 °C and a load of 21.6 kg. The quantity FRR (flow rate ratio) denotes the ratio of flow rates at different loads. Thus, $FRR_{21/5}$ denotes the ratio of $MFR_{21}/MFR_5$.

b) Density

Density of the polymer was measured according to ISO 1183-1:2004 Method A on compression moulded specimen prepared according to EN ISO 1872-2(February 2007) and is given in $kg/m^3$.

c) Comonomer content

13C-NMR analysis was used to determine the comonomer content of the samples. Samples were prepared by dissolving approximately 0.100 g of polymer and 2.5 ml of solvent in a 10 mm NMR tube. The solvent was a 90/10 mixture of 1,2,4-trichlorobenzene and benzene-d6. Samples were dissolved and homogenised by heating the tube and its contents at 150 C in a heating block.

The proton decoupled carbon-13 single pulse NMR spectra with NOE were recorded on a Joel ECX 400 MHz NMR spectrometer. The acquisition parameters used for the experiment included a flip-angle of 45 degrees, 4 dummy scans, 3000 transients and a 1.6 s acquisition time, a spectral width of 20kHz, temperature of 125 C, WALTZ decoupling and a relaxation delay of 6.0 s. The processing parameters used included zero-filling to 32k data points and apodisation using an exponential window function with in 1.0 Hz artificial line broadening followed by automatic zeroth and first order phase correction and automatic baseline correction.

Comonomer contents were calculated using integral ratios taken from the processed spectrum using the assignments described in JC. Randall's work (JMS - Rev. Macromol. Chem. Phys., C29(2&3), 201-317 (1989) using:

$$E = (\alpha B + \alpha H + \beta B + \beta H + \gamma B + \gamma H + \delta++)/2$$

$$B = (\text{methine } B + 2B + 1B)/3$$

$$H = (\text{methine } H + 4H + 3H + 2H)/4$$

where methine is the CH branch site, alpha, beta, gamma the carbon sits adjacent to the CH i.e. CH, alpha, beta, gamma, delta. \delta++ is the bulk CH2 site and the 1,2,3 and 4 sites representing the various carbon sites along the branch with the methyl group being designated 1.

$$CE = 100\% * E/(E+B+H)$$

$$CB = 100\% * B/(E+B+H)$$

$$CH = 100\% * H/(E+B+H)$$

d) Measure of homogeneity

The white spot area of the once compounded composition is determined following ISO 18 553 as follows:

A sample of the composition (including a pigment to make the inhomogeneities visible, e.g. carbon black in an amount as listed in Table 2 below) which is obtained after a single compounding step as listed in Table 1 below, is analysed by firstly obtaining 6 microtome cuts of 6 different parts of the sample (thickness $12 \pm 2\ \mu$m, diameter 3 to 5 mm).

The cuts are evaluated at a magnification of 100, and the size, i.e. the part of the surface, of the non-coloured inclusions ("white-spots", agglomerates, particles) on a total surface of each cut of 0.7 mm$^2$ is determined. All white spots with a diameter > 5 micrometer are counted. The "white spot area" is then expressed as the averaged fraction of the white spots on the total surface of the sample cut.

In addition to the white spot area test, homogeneity complementary is determined to the modified ISO 18553:2002 white spot rating test. In this test, inhomogeneities of the composition present after a single compounding step as described above, which appear as white spots, are determined and rated according to the rating scheme given in ISO 18553:2002. The lower the composition is rated in this test the better is the homogeneity of the composition.

e) Rheological parameters

Rheological parameters such as Shear Thinning Index SHI and Viscosity were determined by using an Anton Paar Phisica MCR 300 Rheometer on compression moulded samples under nitrogen atmosphere at 190°C using 25 m diameter plates and plate and plate geometry with a 1.2 mm gap. oscillatory shear experiments were done within the linear viscosity range of strain at frequencies from 0.05 to 300 rad/s (ISO 6721-10). Five measurement points per decade were made. The determination method is described on page 8, line 15 to page 11, line 16 of WO 00/22040.

The values of storage modulus (G'), loss modulus (G") complex modulus (G*) and complex viscosity ($\eta$*) were obtained as a function of frequency ($\omega$). $\eta$100 is used as abbreviation for the complex viscosity at the frequency of 100 rad/s.

Shear thinning index (SHI), which correlates with MWD and is independent of Mw, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.).

SHI value is obtained by calculating the complex viscosities at given values of complex modulus and calculating the ratio of the two viscosities. For example, using the values of complex modulus of 2.7 kPa and 210 kPa, then $\eta$*(2.7 kPa) and $\pi$*(210 kPa) are obtained at a constant value of complex modulus of 2.7 kPa and 210 kPa, respectively. The shear thinning index $SHI_{2.7/210}$ is then defined as the ratio of the two viscosities $\eta$*(2.7 kPa) and $\eta$*(210 kPa), i.e. $eta_{2.7 kPa}$ / $eta_{210 kPa}$.

The viscosity $eta_{747 Pa}$ is measured at a very low, constant shear stress of 747 Pa and is inversely proportional to the gravity flow of the polyethylene composition, i.e. the higher $eta_{747 Pa}$ the lower the sagging of the polyethylene composition.

f) Pipe Small Scale Steady State Test (S4-Test) - Rapid Crack Propagation (RCP)

The S4 test was conducted according to ISO 13477:1997 E as follows:

The rapid crack propagation (RCP) resistance of a pipe is determined according to a method called the S4 test (Small Scale Steady State), which is described in ISO 13477:1997 (E).

According to the RCP-S4 test a pipe is tested, which has an axial length not below 7 pipe diameters. The outer diameter of the pipe is about 110 mm or greater and its wall thickness about 10 mm or greater. When determining the RCP properties of a pipe in connection with the present invention, the outer diameter and the wall thickness, have been selected to be 110 mm and 10 mm, respectively. While the exterior of the pipe is at ambient pressure (atmospheric pressure), the pipe is pressurised internally, and the internal pressure in the pipe is kept constant at a pressure of 4 bar positive pressure. The pipe and the equipment surrounding it are controlled to a predetermined temperature. A number of discs have been mounted on a shaft inside the pipe to prevent decompression during the tests. A knife projectile is shot, with well-defined forms, towards the pipe close to its one end in the so-called initiating zone in order to start a rapidly running axial crack. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test, but the crack propagation exceeds 4.7 times the pipe diameter. The critical temperature ($T_{crit}$), i.e. the ductile-to-brittle transition temperature as measured according to ISO 13477:2008 (E) is the lowest temperature at which the pipe passes the test. The lower the critical temperature the better since it results in an extension of the applicability of the pipe.

2. Materials

a) Example Ex 1

Into a first loop reactor having a volume of 50 $dm^3$ and operating at a temperature of 60 °C and a pressure of 57 bar propane (C3), ethylene (C2), and hydrogen (H2) were introduced for conducting a pre-polymerization step. In addition 4.1 g/h of a solid polymerisation catalyst component Lynx 200 sold by BASF Catalyst LLC was introduced into the reactor together with triethylaluminium cocatalyst so that the ratio of aluminium to titanium was 20 mol/mol. The density of the polyethylene homopolymer fraction for example Ex 1 produced in the prepolymerization reactor was more than 970 $kg/m^3$. The slurry was withdrawn intermittently from the prepolymerization reactor and directed to a second loop reactor having a volume of 500 $dm^3$ and operating at a temperature of 95 °C and a pressure of 56 bar. Additionally, propane, ethylene, and hydrogen were fed to the second loop reactor whereby the ethylene concentration and the hydrogen to ethylene ratio for example Ex 1 are listed in Table 1. The production split and melt index of the polymer fractions produced in the second loop reactor are listed in Table 1. The slurry was withdrawn intermittently from the second loop reactor by using settling legs and directed to a first gas phase reactor. The first gas phase reactor was operated at a temperature of 85 °C and a pressure of 20 bar. Additional ethylene, 1-hexene comonomer, and hydrogen were fed whereby the ethylene concentration, the 1-hexene to ethylene ratio and the hydrogen to ethylene ratio as well as the production split, the melt flow rate and the density of the polymers of example Ex 1 withdrawn from the gas phase reactor are listed in Table 1. The polymer exiting the first gas phase reactor was directed to a second gas phase reactor. The gas phase reactor was operated at a temperature of 85 °C and a pressure of 20 bar. Additional ethylene, 1-hexene comonomer, and hydrogen were fed whereby the ethylene concentration, the 1-hexene to ethylene ratio and the hydrogen to ethylene ratio as well as the production split, the melt flow rate and the density of the polymers of example Ex 1 withdrawn from the gas phase reactor are listed in Table 1.

The resulting polymer powder was dried from hydrocarbons and mixed with 2100 ppm of Irganox B225 (from Ciba, now part of BASF), 1500 ppm of calcium stearate and 2.3 % of carbon black, based on the final composition. For addition of carbon black a masterbatch containing 39.5 wt.% carbon black (Elftex TP, distributed by Cabot), 0.1 wt.% Irganox 1010 (from Ciba, now part of BASF) and 60.4 wt.% BCL-5931 (ethylenebutylene compolymer having a comonomer content of 1.7 wt.%, an $MFR_2$ (2.16 kg, 190°C, ISO 1133) of 30 g/10 min and a density of 959 kg/m$^3$) in an amount of 5.7 wt% has been used. The mixture was then extruded into pellets by using a CIM90P twin screw extruder (manufactured by Japan Steel Works). The properties of the compounded composition are shown in Table 2.

b) Examples Ex 2 and Ex 3 and Comparative Example Comp. Ex. 4

The procedure of Example 1 was repeated except that the conditions were as shown in Table 1. The properties of the compounded polyethylene compositions are shown in Table 2.

c) Comparative Example Comp. Ex. 5

Into a first loop reactor having a volume of 50 dm$^3$ and operating at a temperature of 40 °C and a pressure of 61 bar propane (C3), ethylene (C2), and hydrogen (H2) were for conducting a pre-polymerization step. The catalyst Lynx 200 from BASF Catalyst LLC was added in a feed rate of 2.5 g/h together with triethylaluminium cocatalyst so that the ratio of aluminium to titanium was 20 mol/mol. The density of the polyethylene homopolymer fraction for comparative example Comp. Ex. 5 produced in the prepolymerization reactor was more than 970 kg/m$^3$. The slurry was withdrawn intermittently from the prepolymerization reactor and directed to a second loop reactor having a volume of 500 dm$^3$ and operating at a temperature of 95 °C and a pressure of 56 bar. Additionally, propane, ethylene, and hydrogen were fed to the second loop reactor whereby the ethylene concentration and the hydrogen to ethylene ratio for comparative example Comp. Ex. 5 are listed in Table 1. The production split and melt index of the polymer fractions produced in the second loop reactor are listed in Table 1. The slurry was withdrawn intermittently from the second loop reactor by using settling legs and directed to a first gas phase reactor. The first gas phase reactor was operated at a temperature of 85 °C and a pressure of 20 bar. Additional ethylene, 1-hexene comonomer, and hydrogen were fed whereby the ethylene concentration, the 1-hexene to ethylene ratio and the hydrogen to ethylene ratio as well as the production split, the melt flow rate and the density of the polymers of comparative example Comp. Ex. 5 withdrawn from the gas phase reactor are listed in Table 1.

The resulting polymer powder was dried from hydrocarbons and mixed with 1050 ppm of Irganox 1010, 1050 ppm of Irgafos 168 and 2.3 % of carbon black in form of the above described master batch, based on the final composition. The mixture was then extruded into pellets by using a CIM90P twin screw extruder (manufactured by Japan Steel Works). The properties of the compounded composition are shown in Table 2.

Table 1: Polymerization conditions

|  | Ex 1 | Ex 2 | Ex 3 | Comp. Ex 4 | Comp. Ex 5 |
|---|---|---|---|---|---|
| **Prepolymerizer:** |  |  |  |  |  |
| Temperature [°C] | 60 | 60 | 60 | 60 | 40 |
| Pressure [bar] | 57 | 57 | 57 | 57 | 61 |
| Split [wt%] | 3 | 3 | 3 | 3 | 2 |

(continued)

| Loop reactor: | | | | | |
|---|---|---|---|---|---|
| Temperature [°C] | 95 | 95 | 95 | 95 | 95 |
| Pressure [bar] | 56 | 56 | 56 | 56 | 56 |
| H2/C2 [mol/kmol] | 603 | 638 | 624 | 640 | 482 |
| C2-concentration [mol%] | 3.4 | 3.1 | 3.0 | 3,6 | 1.8 |
| Split [wt%] | 51 | 51 | 51 | 62 | 47 |
| MFR$_2$ [g/10 min] | 590 | 680 | 730 | 496 | 450 |
| Density [kg/m$^3$] | >970 | >970 | >970 | >970 | >970 |
| 1$^{st}$ Gas phase reactor: | | | | | |
| Temperature [°C] | 85 | 85 | 85 | 85 | --- |
| Pressure [bar] | 20 | 20 | 20 | 20 | --- |
| H2/C2 [mol/kmol] | 72 | 67 | 70 | 24 | --- |
| C6/C2 [mol/kmol] | 7.1 | 5.7 | 5.5 | 21.3 | --- |
| C2-concentration [mol%] | 12.9 | 14.1 | 13.9 | 8,1 | --- |
| Split [wt%] | 37 | 37 | 37 | 24 | --- |
| MFR$_5$ [g/10 min] | 0.77 | 0.63 | 0.59 | 1.30 | --- |
| MFR$_{21}$ [g/10 min] | 23 | 21 | 20 | 56 | --- |
| FRR$_{21/5}$ | 29.9 | 33.3 | 33.9 | 43,1 | --- |
| Density [kg/m$^3$] | 957.5 | 957 | 957.3 | 956.1 | --- |
| 2$^{nd}$ Gas phase reactor: | | | | | |
| Temperature [°C] | 85 | 85 | 85 | 79 | 85 |
| Pressure [bar] | 20 | 20 | 20 | 20 | 20 |
| H2/C2 [mol/kmol] | 0.8 | 1.2 | 1.3 | 0.4 | 15.6 |
| C6/C2 [mol/kmol] | 20 | 29 | 31 | 15 | 29 |
| C2-concentration [mol%] | 4.9 | 3.8 | 3.8 | 8,4 | 4.7 |
| Split [wt%] | 9 | 9 | 9 | 11 | 51 |
| Density [kg/m$^3$] | 954.8 | 954.5 | 953.5 | 953,7 | 947 |
| Compounding: | | | | | |
| Feed [kg/h] | 222 | 220 | 221 | 197 | 281 |
| Screw Speed [rpm] | 402 | 402 | 402 | 386 | 320 |
| SEI [kWh/ton] | 260 | 252 | 250 | 254 | 236 |
| Melt temperature [°C] | 257 | 258 | 265 | 262 | 238 |

Table 2: Properties of the polyethylene compositions

| | Ex 1 | Ex 2 | Ex 3 | Comp. Ex 4 | Comp. Ex 5 |
|---|---|---|---|---|---|
| MFR$_5$ [g/10 min] | 0.24 | 0.23 | 0.36 | 0.20 | 0.22 |
| MFR$_{21}$ [g/10 min] | 7.8 | 7.4 | 9.6 | 8.5 | 9.5 |
| FRR$_{21/5}$ | 32.5 | 32.2 | 26.7 | 42.5 | 43.2 |

(continued)

| | Ex 1 | Ex 2 | Ex 3 | Comp. Ex 4 | Comp. Ex 5 |
|---|---|---|---|---|---|
| Density base resin [kg/m$^3$] | 954.8 | 954.5 | 953.5 | 953,7 | 947 |
| Density composition [kg/m$^3$] | 966.0 | 964.8 | 965.5 | 962.5 | 957 |
| Amount of carbon black [wt%] | 2.3 | 2.3 | 2.3 | 2.3 | 2.3 |
| SHI$_{2.7/210}$ | 89 | 81 | 74 | 150 | 80 |
| Eta$_{2.7\,kPa}$ [kPas] | 331 | 341 | 271 | 547 | 323 |
| Eta$_{747\,Pa}$ [kPas] | 666 | 610 | 489 | 934 | 529 |
| White spot ISO 18553:2002 rating | 1.9 | 1.6 | 1.3 | 2.6 | 5.2 |
| White spot area [area-%] | 0.06 | 0.05 | 0.05 | 0.43 | 1.1 |
| RCP - T$_{crit}$ [°C] | -13 | -13 | -12 | -9 | -11 |

**Claims**

1. A polyethylene composition comprising a base resin having a density of at least 948 kg/m$^3$, wherein the composition has a shear thinning index SHI$_{(2.7/210)}$, being the ratio of the viscosity at a complex modulus of 2.7 kPa and of 210 kPa, of 55 or more and 105 or less and a viscosity at a shear stress of 747 Pa, eta$_{747\,Pa}$, of 450 kPas or more.

2. The polyethylene composition according to claim 1, wherein the composition has a rating in the ISO 18553:2002 white spot rating test of below 2.5.

3. A polyethylene composition comprising a base resin, wherein the composition has a shear thinning index SHI$_{(2.7/210)}$, being the ratio of the viscosity at a complex modulus of 2.7 kPa and of 210 kPa, of 55 or more and 105 or less, a viscosity at a shear stress of 747 Pa, eta$_{747\,Pa}$, of 450 kPas or more, and a rating in the ISO 18553:2002 white spot rating test of below 2.5.

4. The polyethylene composition according to claim 3, wherein the base resin has a density of at least 948 kg/m$^3$.

5. The polyethylene composition according to any of the preceding claims, wherein the base resin comprises at least three ethylene homo- or copolymer fractions (A), (B) and (C).

6. The polyethylene composition according to claim 5, wherein fraction (A) is an ethylene homopolymer.

7. The polyethylene composition according to claims 5 or 6, wherein fractions (B) and (C) are copolymers of ethylene and at least one alpha-olefin comonomer units with 3 to 12 carbon atoms

8. The polyethylene composition according to claims 5 to 7, wherein fraction (B) has a comonomer content of more than 0.1 mol% to below 3.0 mol% and / or fraction (C) has a comonomer content of more than 1.5 mol% to below 10.0 mol%.

9. The polyethylene composition according to claims 5 to 8, wherein the weight ratios of fractions (A) : (B) and (C) is 40 : 60 to 65 : 35 and the weight ratios of fractions (B) : (C) is 55 : 45 to 95 : 5.

10. The polyethylene composition according to any of the preceding claims, wherein the composition has a melt flow rate MFR$_5$ at a load of 5 kg and a temperature of 190°C of below 1.0 g/10 min, determined according to ISO 1133.

11. The polyethylene composition according to any of the preceding claims, wherein the composition has a white spot area of below 0.5 %.

12. The polyethylene composition according to any of the preceding claims, wherein the composition has a critical temperature in the rapid crack propagation test according to ISO 13477:1997 (E) of - 10°C or lower.

**13.** A process for the production of a polyethylene composition according to any of the preceding claims, wherein the base resin is produced in different stages of a multi-stage process.

**14.** An article comprising the polyethylene composition according to any of claims 1 to 12.

**15.** Use of a polyethylene composition according to any of claims 1 to 12 for the production of an article.

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 655 334 A1 (BOREALIS TECH OY [FI]) 10 May 2006 (2006-05-10) * paragraph [0028] * * abstract; claims 1-19 * * page 8, paragraph 102; example comp example; table 1 * ----- | 1-15 | INV. C08L23/06 C08L23/08 |
| X | WO 2008/131817 A1 (BOREALIS TECH OY [FI]; BAECKMAN MATS [SE]) 6 November 2008 (2008-11-06) * abstract; claims 1-16 * * pages 8-10 * * page 15; example comp * ----- | 1-15 | |
| X | EP 1 655 335 A1 (BOREALIS TECH OY [FI]) 10 May 2006 (2006-05-10) * abstract; claims 1-24 * * example comp examp * ----- | 1-15 | |
| X | EP 1 655 337 A1 (BOREALIS TECH OY [FI]) 10 May 2006 (2006-05-10) * the whole document * ----- | 1-15 | TECHNICAL FIELDS SEARCHED (IPC) C08L |

The present search report has been drawn up for all claims

| Place of search | Date of completion of the search | Examiner |
|---|---|---|
| The Hague | 10 February 2012 | Bergmans, Koen |

EPO FORM 1503 03.82 (P04C01)

**ANNEX TO THE EUROPEAN SEARCH REPORT
ON EUROPEAN PATENT APPLICATION NO.**                    EP 11 00 7578

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2012

| Patent document cited in search report | | Publication date | Patent family member(s) | | | Publication date |
|---|---|---|---|---|---|---|
| EP 1655334 | A1 | 10-05-2006 | AR | 051615 | A1 | 24-01-2007 |
| | | | AT | 349489 | T | 15-01-2007 |
| | | | AU | 2005300654 | A1 | 11-05-2006 |
| | | | CN | 101035851 | A | 12-09-2007 |
| | | | DE | 602004003960 | T2 | 08-11-2007 |
| | | | EA | 200700732 | A1 | 26-10-2007 |
| | | | EP | 1655334 | A1 | 10-05-2006 |
| | | | ES | 2278263 | T3 | 01-08-2007 |
| | | | KR | 20070065389 | A | 22-06-2007 |
| | | | PT | 1655334 | E | 30-03-2007 |
| | | | US | 2009252910 | A1 | 08-10-2009 |
| | | | WO | 2006048257 | A1 | 11-05-2006 |
| WO 2008131817 | A1 | 06-11-2008 | AT | 452937 | T | 15-01-2010 |
| | | | AU | 2008243469 | A1 | 06-11-2008 |
| | | | CA | 2681131 | A1 | 06-11-2008 |
| | | | CN | 101668809 | A | 10-03-2010 |
| | | | EP | 1985660 | A1 | 29-10-2008 |
| | | | ES | 2334267 | T3 | 08-03-2010 |
| | | | RU | 2009133958 | A | 10-06-2011 |
| | | | US | 2010035008 | A1 | 11-02-2010 |
| | | | WO | 2008131817 | A1 | 06-11-2008 |
| EP 1655335 | A1 | 10-05-2006 | AR | 051617 | A1 | 24-01-2007 |
| | | | AT | 349490 | T | 15-01-2007 |
| | | | AU | 2005300656 | A1 | 11-05-2006 |
| | | | CN | 101048454 | A | 03-10-2007 |
| | | | DE | 602004003961 | T2 | 28-06-2007 |
| | | | EA | 200700736 | A1 | 26-10-2007 |
| | | | EP | 1655335 | A1 | 10-05-2006 |
| | | | ES | 2276211 | T3 | 16-06-2007 |
| | | | KR | 20070084447 | A | 24-08-2007 |
| | | | PT | 1655335 | E | 28-02-2007 |
| | | | US | 2009062463 | A1 | 05-03-2009 |
| | | | WO | 2006048259 | A1 | 11-05-2006 |
| EP 1655337 | A1 | 10-05-2006 | AT | 383400 | T | 15-01-2008 |
| | | | AU | 2005300740 | A1 | 11-05-2006 |
| | | | CN | 101124278 | A | 13-02-2008 |
| | | | DE | 602004011231 | T2 | 08-01-2009 |
| | | | EA | 200700737 | A1 | 26-10-2007 |
| | | | EP | 1655337 | A1 | 10-05-2006 |
| | | | ES | 2298666 | T3 | 16-05-2008 |
| | | | KR | 20070065388 | A | 22-06-2007 |
| | | | PT | 1655337 | E | 18-04-2008 |
| | | | US | 2009198018 | A1 | 06-08-2009 |

**ANNEX TO THE EUROPEAN SEARCH REPORT
ON EUROPEAN PATENT APPLICATION NO.**                    EP 11 00 7578

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2012

| Patent document cited in search report | Publication date | Patent family member(s) | Publication date |
|---|---|---|---|
| | | WO   2006048255  A1 | 11-05-2006 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 580930 A
- GB 1532231 A
- US 4309521 A
- US 4368304 A
- EP 517868 A
- EP 0797599 A
- EP 2186833 A
- US 4582816 A
- US 3405 A
- US 109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087261 A
- US 4578879 A
- EP 600414 A
- EP 721798 A
- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- ES 747
- EP 688794 A
- WO 9951646 A
- WO 0155230 A
- WO 2005118655 A
- EP 810235 A
- WO 2006063771 A
- EP 428054 A
- WO 9619503 A
- WO 9632420 A
- WO 0022040 A

### Non-patent literature cited in the description

- **GELDART ; BAYENS.** *The Design of Distributors for Gas-fluidised Beds, Powder Technology,* 1985, vol. 42
- **GELDART.** Gas Fluidisation Technology. J. Wiley & Sons, 1996
- **HEINO, E.L. ; LEHTINEN, A. ; TANNER J. ; SEPPÄLÄ, J. ; NESTE OY ; PORVOO, FINLAND.** Rheological characterization of polyethylene fractions. *Theor. Appl. Rheol., Proc. Int. Congr. Rheol,* 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society,* 1995